Europäisches Patentamt

European Patent Office

Office européen des brevets

(11) Numéro de publication: **0 165 128
B1**

(12) **FASCICULE DE BREVET EUROPEEN**

(45) Date de publication du fascicule du brevet:
28.10.87

(51) Int. Cl.⁴: **D 04 B 1/22**, B 29 C 67/14

(21) Numéro de dépôt: **85400936.2**

(22) Date de dépôt: **14.05.85**

(54) **Perfectionnements aux profilés composites tricotés en trois dimensions et procédé pour leur fabrication.**

(30) Priorité: **15.05.84 FR 8407489**

(43) Date de publication de la demande:
**18.12.85 Bulletin 85/51**

(45) Mention de la délivrance du brevet:
**28.10.87 Bulletin 87/44**

(84) Etats contractants désignés:
**AT BE CH DE GB IT LI NL SE**

(56) Documents cités:
**EP - A - 0 073 648
DE - A - 2 032 423
FR - A - 2 227 748
US - A - 3 834 424**

(73) Titulaire: **AEROSPATIALE Société Nationale
Industrielle, 37, Boulevard de Montmorency,
F-75781 Paris Cédex 16 (FR)**

(72) Inventeur: **Banos, Jean, 15 rue du Truc,
F-33700 Merignac (FR)**

(74) Mandataire: **Barnay, André François, Cabinet
Barnay 80 rue Saint-Lazare, F-75009 Paris (FR)**

ACTORUM AG

## Description

La présente invention est relative à un profilé en matière composite, du type tricoté en trois dimensions, en fils ou fibres, naturels ou synthétiques et imprégnés d'une résine.

On connaît déjà de nombreux profilés de ce type et les procédés de tricotage en trois dimensions sont maintenant couramment utilisés.

Cependent les profilés réalisés jusqu'à présent, comme décrit par exemple dans les brevets français de la demanderesse n° 2 227 748 et n° 2 395 340, sont tous des profilés ayant en section la forme d'un solide de révolution dont la longueur est limitée par la nature même de leur procédé de fabrication. Le brevet n° 2 395 340 décrit un procédé qui consiste à utiliser un plateau sur lequel des tiges ou barres sont fixées par une extrémité en délimitant ainsi la périphérie d'un solide de révolution, ce plateau étant entraîné en rotation de façon à faire passer lesdites barres devant des têtes de tricotage dont les aiguilles posent des fils dans deux directions transversales, les fils disposés dans la troisième dimension étant ensuite posés dans le sens des tiges, en les chassant individuellement suivant le procédé décrit dans la demande de brevet français n° 80/17666 (FR-A-2 488 291)de la demanderesse.

A l'exception des brevets précités, on connaît également un brevet européen n° 0 056 351, qui décrit un procédé suivant lequel on réalise un élément tissé en trois dimensions ayant une certaine épaisseur et dont les parties marginales sont séparées en deux dans le sens de l'épaisseur.

Pour réaliser un profilé il est alors nécessaire de plier lesdites parties marginales vers l'extérieur pour obtenir la forme désirée, avant l'imprégnation. Ce procédé limite les formes pouvant être obtenues pour la section des profilés.

Le but de l'invention est de réaliser un profilé en matériau composite du type précité, sous une forme nouvelle et commode.

Le profilé suivant l'invention, du type tricoté en trois dimensions en fils ou fibres naturelles ou synthétiques imprégnées d'une résine est caractérisé en ce qu'il présente en section transversale une forme quelconque comportant des angles rentrants et/ou des parties concaves ou une forme polygonale creuse ou autre et en ce qu'il est tricoté en continu dans les trois dimensions, sans limitations dans le sens longitudinal.

L'invention a également pour objet un procédé de fabrication d'un profilé composite tel que défini ci-dessus caractérisé en ce qu'on tend et on maintient une pluralité de fils parallèles dans le sens longitudinal du profilé, suivant une configuration d'ensemble qui correspond à la forme en section droite du profilé désiré, et en ce qu'on déplace lesdits fils longitudinaux en continu dans le sens longitudinal devant un ensemble de têtes de tricotage, suivant deux directions, de type connu en soi, ledit ensemble déposant des nappes de fils continus transversalement auxdites fils longitudinaux.

Suivant un mode préféré de réalisation de l'invention, les deux directions desdites nappes de fils sont orthogonales et lesdites nappes sont perpendiculaires auxdits fils longitudinaux.

Suivant une autre caractéristique de l'invention, ledit ensemble de têtes de tricotage comporte plusieurs trains d'aiguilles correspondant chacun à une portion finie de la forme en section du profilé.

Suivant encore une autre caractéristique de l'invention, chacune desdites portions finies de la forme en section du profilé est formée par desdits fils longitudinaux disposés en rangées pour former un certain nombre de couloirs se croisant.

La description qui va suivre, en regard du dessin annexé à titre d'exemples non limitatifs, permettra de bien comprendre comment la présente invention peut être mise en pratique.

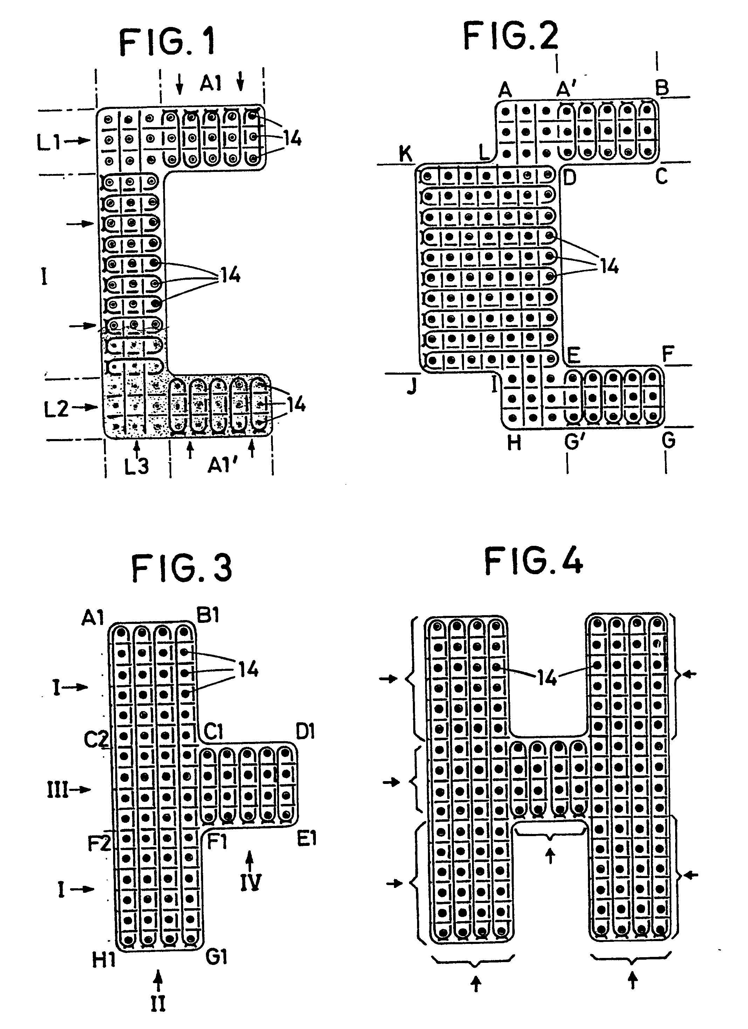

Les figures 1 à 4 sont des vues en section d'exemples de profilés composites tricotés en trois dimensions suivant l'invention et faisant apparaître le découpage de ces sections en portions finies.

En se référant au dessin, on constate que chacune des figures montre en section une forme présentant plusieurs angles rentrants.

A titre d'exemple non limitatif le profilé de la figure 1 présente une forme en C comportant une partie intermédiaire I aux extrémités de laquelle sont accolées perpendiculairement deux ailes latérales L1 et L2, s'étendant dans le même sens sur une longueur égale A1 et A1', la partie intermédiaire I ayant une largeur L3 (en considérant le dessin).

Le profilé de la figure 1 sera considéré comme composé d'une portion rectangulaire I de largeur L3 et de deux portions latérales rectangulaires L1 et L2 qui font saillie latéralement sur des longueurs égales A1 et A1', la hauteur totale du profilé étant égale à I + L1 + L2.

Le profilé est formé en tandant tout d'abord une pluralité de fils 14 que l'on maintien parallèles, suivant la configuration en C représentée et constituant les fils longitudinaux du profilé.

On déplace lentement cet ensemble de fils 14 devant un ensemble de têtes de tricotage d'un type connu (tel que décrit par exemple dans les brevets précités de la demanderesse) non représenté au dessin, comportant, pour l'exemple de la figure 1, au total six trains d'aiguilles, savoir:

a) un premier train d'aiguilles I pour la portion intermédiaire, ayant une longueur correspondant à la largeur de la portion L3;

b) un second et un troisième trains d'aiguilles pour les portions L1 et L2, ayant une longueur correspondant à L3 + A1 (ou A1'), ces trois premiers trains d'aiguilles étant parallèles;

c) un quatrième train d'aiguilles L3 ayant une longueur égale à I + L1 + L2, et

d) un cinquième et un sixième trains d'aiguilles A1, A1' égaux et de sens opposé, comme représenté, ayant une longueur égale à L1, pour les portions des ailes en saillie sur la partie intermédiaire I.

On remarquera que les aiguilles des trois premiers trains I, L1 et L2 sont perpendiculaires aux aiguilles du second groupe de trois trains L3, A1 et A1', ces deux derniers étant dirigés en sens opposé, l'un par rapport à l'autre.

Les trains d'aiguilles des têtes de tricotage posent de façon connue les fils de part et d'autre des fils longitudinaux 14 dans les couloirs se croisant et formés par les rangs des fils longitudinaux, et on fait avancer les fils 14 devant l'ensemble de têtes de tricotage au fur et à mesure de la pose par celui-ci de fils formant des nappes transversales.

On comprend que l'on peut ainsi tricoter en continu en trois dimensions des profilés ayant une forme quelconque en section.

Une partie en grisé de la figure 1 montre les fils noyés dans la résine.

Un second exemple en est représenté à la figure 2 qui montre un profilé du même type que celui de la figure 1 mais dont la partie intermédiaire est plus large et fait saillie dans la direction opposé à celle des ailes.

Le profilé A, B, C, D, E, F, G, H, I, J, K, L peut être considéré comme composé de sept portions, savoir:
    a)  une première portion A, B, C, L
    b)  une seconde portion, identique, F, G, H, I
    c)  une troisième portion K, D, E, J
    d)  une quatrième portion I, J, K, L
    e)  une cinquième portion A,A', (D,E) G', H, (I,L)
    f)  une sixième portion A', B, C, D et
    g)  une septième portion E, F, G, G', identique à la précédente.

On comprend que, dans cet exemple, l'ensemble de têtes de tricotage devra comprendre trois trains d'aiguilles parallèles dont deux identiques et de sens opposé au troisième pour les deux premières portions ayant une longuer AB ( =IF) et le troisième pour la troisième portion, ayant une longueur KD, et quatres autres trains d'aiguilles, perpendiculaires aux trois premiers, savoir: le quatrième pour la portion I, J, K, L, ayant une longueur JK, le cinquième pour la portion A,A', (D,E) G', H (I,L), ayant une longueur AH, et les sixième et septième pour les portions A', B, C, D et E, F, G, G', identiques et de sens opposé, et ayant une longuer BC (= FG).

Le procédé suivant l'invention s'appliquera suivant la même théorie pour les exemples des figures 3 et 4, de manière que chaque portion de la surface de la section du profilé soit couverte par deux trains d'aiguilles se croisant à angle droit, de part et d'autre des fils longitudinaux 10, en passant dans les rangs et les couloirs à angles droits délimités par ces fils.

Dans l'exemple de la figure 3, le profilé en T couché sera formé de cinq portions, c'est-à-dire, suivant le même raisonnement:
    a)  deux portions identiques A1, B1, C1, C2, et F1, G1, H1, F2
    b)  une portion A1, B1 (C1, F1) G1, H1, (F2, C2)
    c)  une portion C2, (C1), D1, E1, (F1), F2
    d)  une portion C1, D1, E1, F1
et les trains d'aiguilles de l'ensemble de têtes agissant comme représenté par les flèches I, II, III, IV suivant l'ordre ci-dessus.

Dans l'exemple de la figure 4, qui montre un profilé en H, les différents trains d'aiguilles et leurs sens d'action sont indiqués par des flèches et des accolades, soit au total huit portions.

On comprend que les épaisseurs dégressives des ailes inférieures du profilé représenté à la figure 4, sont obtenues en jouant individuellement sur la longueur et/ou la course des aiguilles dans les trains correspondant aux portions de section de profilé incluant lesdites épaisseurs dégressives. On comprend enfin que les profilés tricotés par un tel procédé peuvent être réalisés avec des fils (ou fibres) secs ou préimprégnés et qu'ensuite ces porfilés peuvent être durcis par tout moyen connu, après imprégnation pour le cas de profilés obtenus à partir de fils secs.

## Revendications

1. Profilé composite du type tricoté en trois dimensions en fils ou fibres naturels ou synthétiques imprégnés d'une résine, caractérisé en ce qu'il présente en section transversale une forme quelconque comportant des angles rentrants et/ou des parties concaves ou une forme polygonale creuse ou autre, et en ce qu'il est tricoté en continu dans les trois dimensions sans limitations dans le sens longitudinal.

2. Procédé de fabrication d'un profilé tel que défini suivant la revendication 1, caractérisé en ce qu'on tend et on maintient une pluralité de fils parallèles dans le sens longitudinal du profilé, suivant une configuration d'ensemble qui correspond à la forme en section droite du profilé désiré, et on déplace lesdits fils longitudinaux (14) en continu dans le sens longitudinal devant un ensemble de têtes de tricotage suivant deux dimensions, de type connu en soi, ledit ensemble déposant des nappes de fils continus transversalement auxdits fils longitudinaux (14).

3. Procédé suivant la revendication 2, caractérisé en ce que ledit ensemble de têtes de tricotage comporte plusieurs trains d'aiguilles correspondant chacun à une portion finie de la forme en section du profilé.

4. Procédé suivant la revendication 3, caractérisé en ce que lesdits fils longitudinaux sont disposés en rangées pour former des couloirs se croisant, délimitant chacune desdites portions finies de la forme en section du profilé, cette section étant considérée dans le plan desdites nappes déposées transversalement auxdits fils longitudinaux.

## Patentansprüches

1. Dreidimensional gewirktes Verbundprofil aus mit einem Harz imprägnierten Fäden oder natürlichen oder synthetischen Fasern, dadurch gekennzeichnet, dass es im Querschnitt eine beliebige Form mit einspringenden Ecken und/oder konkaven Seiten oder hohle polygonale sonstige Form aufweist, und dass es kontinuierlich in alle drei Dimensionen ohne Begrenzung in Längsrichtung gewirkt ist.

2. Verfahren zur Herstellung eines Profils nach Anspruch 1, dadurch gekennzeichnet, dass man eine Mehrzahl paralleler Fasern in Längsrichtung des Profils spannt und hält, gemäss einer Gesamtkonfiguration, welche der Form im geraden Querschnitt des gewünschten Profils entspricht, und man die Längsfäden (14) kontinuierlich in Längsrichtung an einem Satz von Wirkköpfen an sich bekannter Art nach zwei Dimensionen vorbeiführt, wobei dieser Satz Vliese von kontinuierlichen Fäden quer zu den Längsfäden (14) ablegt.

3. Verfahren nach Anspruch 2, dadurch gekennzeichnet, dass der Satz von Wirkköpfen mehrere Nadelreihen aufweist, deren jede einem fertigen Teil der Form im Querschnitt des Profils entspricht.

4. Verfahren nach Anspruch 3, dadurch gekennzeichnet, dass die Längsfäden in Reihen angeordnet sind, um sich kreuzende Bahnen zu bilden, welche jeden der fertigen Teile der Form im Querschnitt des Profils abgrenzen, wobei dieser Querschnitt in der Ebene der quer zu den Längsfäden abgelegten Vliese betrachtet wird.

**Claims**

1. Reinforced section of the type knitted in three dimensions, of threads or natural fibres or synthetic material impregnated with a resin, characterised in that, in cross-section, the section has any shape having reentrant corners and/or concave parts or a hollow or other polygonal shape, and in that the section is knitted continuously in three dimensions without limitation in the longitudinal direction.

2. Process for the manufacture of a section such as defined according to claim 1, characterised in that one stretches out and maintains a plurality of parallel threads in the longitudinal direction of the section, according to a group configuration which corresponds to the shape of the correct section of the desired section, and one displaces said longitudinal threads (14) continuously in the longitudinal direction past an assembly of knitting heads, of a type known per se, operable in two dimensions, said assembly depositing courses of thread continuously transversely to said longitudinal threads (14).

3. Process according to claim 2, characterised in that said assembly of knitting heads comprises several rows of needles each corresponding to one finished portion of the sectional shape of the section.

4. Process according to claim 3, characterised in that said longitudinal threads are arranged in rows to form intersecting passages, delineating each said finished portion of the sectional shape of the section, the sectional shape being considered in the plane of said courses deposited transversely on said longitudinal threads.

# FIG.1

# FIG.2

# FIG.3

# FIG.4